# DEMANDE DE BREVET EUROPEEN

(11) **EP 0 562 969 A1**
(43) Date de publication de la demande: **29.09.1993**
(21) Numéro de dépôt: 93400790.7
(22) Date de dépôt: 26.03.1993
(51) Int. Cl.: C04B 28/02

(54) **Composition pour la réalisation d'une barrière anti-pollution polyvalente et procédé pour réaliser une telle barrière**

(30) Priorité: 27.03.1992 FR 9203738
(71) Demandeur: COMPAGNIE DU SOL, F-92005 Nanterre (FR)
(72) Inventeur: Gouvenot, Daniel, F-92110 Clichy (FR)
(74) Mandataire: Nony, Michel

(57) **Abrégé**

Composition à base d'eau, de ciment et d'argile permettant de réaliser une barrière de longue durée de vie contre la diffusion des substances polluantes constituées par des cations métalliques, notamment de métaux lourds et/ou des produits organiques toxiques.

Elle comporte en outre du charbon actif et un sel basique soluble capable de tamponner la phase aqueuse de la composition à un pH au moins égal à 9, pendant une période d'au moins une dizaine d'années.

## Description

La présente invention a pour objet une composition pour la réalisation d'une barrière anti-pollution polyvalente, et un procédé pour la réalisation d'une telle barrière.

On sait que dans la plupart des cas, les déchets polluants sont stockés dans des décharges en étant enfouis dans le sol, et qu'il est nécessaire de réaliser autour de telles décharges des barrières anti-pollution qui évitent la dissémination des déchets notamment dans la nappe phréatique.

On sait également que les déchets polluants sont principalement de deux natures, à savoir d'une part des cations de métaux lourds, éventuellement radio-actifs, et d'autre part des composés organiques toxiques.

On connaît déjà par le brevet français 81.21025 un coulis d'injection utilisable pour réaliser des parois de protection dans le sol vis à vis de la diffusion des déchets radio-actifs qui est constitué par un mélange d'eau, de ciment, d'argile et de silice. Dans le cas où la silice est constituée au moins en partie par des cendres volantes, il est également connu d'après ce brevet d'ajouter à la composition du carbonate de sodium qui joue le rôle d'agent défloculant de l'argile et d'agent activateur de la silice.

Toutefois, de telles compositions connues ne permettent pas de constituer des barrières efficaces vis à vis des polluants organiques.

Le brevet français 84.11863 décrit un coulis permettant de constituer dans le sol des parois empêchant ou freinant la migration des cations métalliques. Ce coulis est constitué par de l'eau, du ciment, de l'argile, de la silice, du carbonate de sodium, et du pyrophosphate de sodium et/ou du tartrate de potassium. La présence d'une part du carbonate de sodium et d'autre part du pyrophosphate de sodium et/ou du tartrate de potassium permet de former des composés insolubles de métaux lourds, tandis que le carbonate de sodium joue également le rôle d'agent activateur de la silice.

Les compositions connues de ce type présentent l'inconvénient de perdre leur efficacité au bout d'un temps plus ou moins long.

On connaît également par le brevet français 90.00087 une composition utilisable pour réaliser dans le sol une paroi susceptible d'empêcher ou de freiner la diffusion de substances organiques toxiques, qui est constituée par un mélange d'eau, de ciment ou de liant hydraulique, de bentonite et de charbon actif.

La présente invention a pour objet une composition à base d'eau, de ciment et d'argile permettant de réaliser une barrière de longue durée de vie contre la diffusion des substances polluantes constituées aussi bien par des cations métalliques notamment de métaux lourds que par des produits organiques. Cette composition étant caractérisée par le fait qu'elle comporte en outre du charbon actif et un sel basique soluble capable de tamponner la phase aqueuse de la composition à un pH au moins égal à 9 pendant une période d'au moins une dizaine d'années.

Par phase aqueuse de la composition on entend le liquide interstitiel qui subsiste dans la composition après qu'elle ait effectué sa prise pour réaliser la barrière anti-pollution.

Conformément à l'invention, le sel basique doit d'une part conférer à la phase aqueuse un pH ayant une valeur supérieure à 9 et d'autre part être présent dans la composition à une concentration suffisante pour lui permettre d'assurer cette fonction pendant une longue période d'au moins une dizaine d'années et de préférence de 50 à 100 ans.

Conformément à l'invention, le charbon actif peut être de type connu, comme par exemple celui vendu sous la dénomination AKTICARBON TK par la société CECA.

Conformément à l'invention, le sel tampon peut être constitué par exemple par du carbonate ou du bicarbonate de sodium (Na₂CO₃ou NaHCO₃) présent, ou encore par de la chaux vive ou éteinte (CaO ou Ca(OH)₂) en quantité suffisante pour assurer son effet tampon.

Conformément à l'invention les proportions pondérales des constituants de la composition sont de préférence les suivantes :
- eau 1000
- ciment ou liant 40 à 2000
- argile 25 à 1000
- Charbon actif 5 à 500
- Sel tampon soluble à un pH > 9 30 à 500

Conformément à l'invention, la composition peut éventuellement contenir de la silice, telle que de la fumée de silice ou des cendres volantes, par exemple dans une proportion pondérale de 25 à 1500 kg pour 1.000 litres d'eau. Cette adjonction permet comme cela est connu de réduire la perméabilité de la composition.

La composition selon l'invention peut également contenir des adjuvants connus tels que des fluidifiants tel que le naphtalène sulfonate dans une proportion pondérale allant jusqu'à 20 kg pour 1.000 litres d'eau, ou des retardateurs comme le lignosulfonate de sodium dans une proportion pondérale allant jusqu'à 50 kg pour 1.000 litres d'eau ou encore des plastifiants réducteurs d'eau, tels que le produit vendu sous la dénomination CERPLAST par la Société CHRYSO dans une proportion pondérale allant jusqu'à 30 kg pour 1.000 litres d'eau.

La composition selon l'invention peut également contenir des sels précipitants les cations métalliques tels que du tartrate de sodium et/ou de pyrophosphate de sodium dans une proportion pondérale allant jusqu'à 20 kg par 1.000 litres d'eau.

Dans un mode de réalisation particulier, la composition selon l'invention contient des agrégats tels que du sable ou du gravier qui permettent la réalisation de mortier ou de béton présentant d'excellentes propriétés de barrière antipollution.

Grâce à sa solution tampon interstitielle qui assure un pH au moins égal à 9, et avantageusement compris entre 9 et 12, la composition selon l'invention présente la particularité d'assurer et de préserver pendant une très longue période l'insolubilité des polluants cationiques et d'éviter leur relargage ultérieur.

Les compositions selon l'invention peuvent se présenter sous la forme de coulis auto-durcissants, de bétons plastiques ou de bétons durs.

Elles permettent la réalisation à l'aide des techniques traditionnelles de parois étanches dans le sol pour éviter la diffusion des polluants.

Elles permettent également le remplissage par injection des vides existant dans le sol pour éviter la diffusion de ces mêmes polluants.

Les compositions selon l'invention permettent enfin de réaliser des coques en béton pour contenir les déchets ainsi que d'autres structures de même nature telles que des murs, des réservoirs etc.

La présente invention a également pour objet un procédé pour réaliser des barrières anti-pollution, caractérisé par le fait qu'il consiste à mouler ou injecter dans le sol une composition durcissante telle que celles qui viennent d'être décrites.

Dans une variante, le procédé consiste à réaliser des conteneurs, murs ou réservoirs à l'aide de cette composition.

Dans le but de mieux faire comprendre l'invention on va en décrire maintenant à titre d'illustration, et sans aucun caractère limitatif des exemples de modes de réalisation.

### EXEMPLE 1.

Pour réaliser une paroi de confinement souterraine destinée à ceinturer une zone polluée dont la nappe d'eau contient des métaux lourds et des polluants organiques, on utilise selon l'invention, un béton plastique dont la composition pondérale correspond à la formule suivante :
- Eau 1.000
- Argile (Montmorillonite 25 Illite 100) 20 à 100
- Liant (CLK 45 ou liant à base de laitier, à 80% de laitier) 300
- Charbon actif (AKTICARBON TK de la Société CECA) 25
- Sel basique (Na₂CO₃) 10
- Agregats (sable + cailloux 5/15) 3.000

La paroi réalisée avec le béton correspondant à cette composition présente les caractéristiques suivantes :
- résistance à 28 Jours : 0,5 à 1 MPa
- perméabilité à 28 Jours : K = 10⁻⁹/10⁻¹⁰m/s
- rétention du plomb : au moins 20 kg/m³ de béton
- rétention du mercure : au moins 20kg/m³ de béton
- rétention du phénol : au moins 3kg/m³ de béton.

Dans une variante, cette composition comporte en outre :
- silice (fumée de silice) 30
- adjuvant (lignosulfate de sodium agissant comme fluidifiant et retardateur) 5
- sel précipitant (tartrate de sodium) 8

Grâce à ces adjonctions, la perméabilité est abaissée à 10⁻¹⁰/10⁻¹¹m/s.

### EXEMPLE 2.

On réalise selon l'invention des murs ou des réservoirs capables d'arrêter la migration des cations radio-actifs et des polluants organiques à l'aide d'un béton ayant la composition suivante :
- Eau 1.000
- Argile (vermiculite) 5
- Liant (CLK 45 ou CPJ45 ou CPA 45) 2.200
- Charbon actif (Akticarbon TK de la société CECA) 50
- Sel tampon basique (Na₂CO₃) 30
- Agrégats (sable + Graviers 5/15 et 15/25) 9.000

Après prise, ce béton présente une résistance mécanique à 28 jours de 300 MPa et une perméabilité à 28 jours de 10⁻¹¹m/s.

La rétention du césium est de 30kg/m³ de béton. La rétention du strontium est de 30kg/m³ de béton, et la rétention de dichloroéthane est supérieure à 5Kg/m³ de béton.

Dans une variante, on peut ajouter à la composition, les composés suivants :
- Silice (Cendres volantes) 300
- Adjuvant platifiant réducteur d'eau (CERPLAST de la Société CHRYSO) 2
- Sel précipitant (pyrophosphate de sodium) 20

La perméabilité est abaissée à environ 10⁻¹²m/s et la résistance mécanique passe à 60 MPa.

### EXEMPLE 3

Selon l'invention, on obtient un coulis auto durcisseur pour paroi étanche destinée à isoler une zone dans laquelle la nappe phréatique a été polluée en réalisant une composition ayant la composition pondérale suivante :
- eau 1000
- Argile (Montmorillonite ou bentonite de type CVIS) 30
- Liant (CLK45 ou ciment à base de laitier) 200
- Charbon actif 5
- Sel basique (Ca(OH)₂) 100

Ce coulis peut également être injecté dans le terrain.

Il est bien entendu que les exemples qui ont été donnés ci-dessus ne présentent aucun caractère limitatif, et qu'ils pourront recevoir toutes modifications désirables sans sortir pour cela du cadre de l'invention.

## Revendications

1. Composition à base d'eau, de ciment et d'argile permettant de réaliser une barrière de longue durée de vie contre la diffusion des substances polluantes constituées par des cations métalliques, notamment de métaux lourds et/ou des produits organiques toxiques, composition caractérisée par le fait qu'elle comporte en outre du charbon actif et un sel basique soluble capable de tamponner la phase aqueuse de la composition à un pH au moins égal à 9, pendant une période d'au moins une dizaine d'années.

2. Composition selon la revendication 1, caractérisée par le fait que ses constituants sont présents dans les proportions pondérales suivantes :
- eau 1000
- ciment ou liant 40 à 2000
- argile 25 à 1000
- charbon actif 5 à 500
- sel tampon à un ph > 9 30 à 500

3. Composition selon l'une quelconque des revendications précédentes, caractérisée par le fait qu'elle comporte en outre de la silice telle que de la fumée de silice ou des cendres volantes dans une proportion pondérale allant jusqu'à 1500 kg pour 1000 litres d'eau.

4. Composition selon l'une quelconque des revendications précédentes, caractérisée par le fait qu'elle contient un fluidifiant tel que du naphtalène sulfonate dans une proportion pondérale allant juqu'à 20 kg pour 1.000 litres d'eau.

5. Composition selon l'une quelconque des revendications précédentes, caractérisée par le fait qu'elle contient un retardateur tel que le lignosulfate de sodium dans une proportion pondérale allant jusqu'à 50 kg pour 1.000 litres d'eau.

6. Composition selon l'une quelconque des revendications précédentes, caractérisée par le fait qu'elle contient un plastifiant réducteur d'eau tel que le produit vendu sous la dénomination CERPLAST par la société CHRYSO dans une proportion pondérale allant jusqu'à 30 kg pour 1.000 litres d'eau.

7. Composition selon l'une quelconque des revendications précédentes, caractérisée par le fait qu'elle contient un sel précipitant les cations métalliques tel que du tartrate de sodium ou du pyrophosphate de sodium dans une proportion pondérale allant jusqu'à 20 kg pour 1.000 litres d'eau.

8. Composition selon l'une quelconque des revendications précédentes, caractérisée par le fait qu'elle contient des agrégats, du sable ou du gravier permettant la réalisation d'un mortier ou d'un béton.

9. Composition selon l'une quelconque des revendications précédentes, caractérisée par le fait que la solution tampon assure le maintien d'un pH compris entre 9 et 12.

10. Procédé pour réaliser une barrière anti-pollution, caractérisé par le fait que l'on moule ou l'on injecte dans le sol une composition selon l'une quelconque des revendications 1 à 9.

11. Procédé pour réaliser des conteneurs, murs ou réservoirs anti-pollution, caractérisé par le fait que l'on utilise une composition selon la revendication 8.
